# EUROPEAN PATENT SPECIFICATION

(11) **EP 3 348 826 B1**
(45) Date of publication and mention of the grant of the patent: **03.05.2023**
(21) Application number: 17151173.6
(22) Date of filing: 12.01.2017
(51) Int. Cl.: F03D 7/02, F03D 1/06

(54) **A WIND TURBINE BLADE COMPRISING A TRAILING EDGE NOISE REDUCING DEVICE**
WINDTURBINENSCHAUFEL MIT EINER HINTERKANTENGERÄUSCHREDUZIERUNGSVORRICHTUNG
PALE DE TURBINE ÉOLIENNE COMPRENANT UN DISPOSITIF DE RÉDUCTION DE BRUIT DE BORD DE FUITE

(43) Date of publication of application: 18.07.2018
(73) Proprietor: LM Wind Power A/S, 6000 Kolding (DK)
(72) Inventor: ARCE, Carlos, 1113 LC Diemen (NL); MADSEN, Jesper, 6621 Gesten (DK)
(74) Representative: COPA Copenhagen Patents

(56) References cited:
- EP-A1- 2 851 555
- EP-A1- 2 940 292
- WO-A1-2015/192915
- WO-A1-2016/001420
- US-A1- 2010 143 144

## Description

### Technical field

The present invention relates to a noise reducing device for a wind turbine blade, having a first end, a second end, a first side surface, and a second side surface, wherein the noise reducing device comprises a base part extending from the first end to a proximal end, at least one array of first noise reducing elements extending from the proximal end to the second end, and at least one array of second noise reducing elements arranged relative to the first noise reducing elements.

The present invention further relates to a wind turbine blade with at least one noise reducing device as mentioned above.

### Background

It is well-known that large wind turbine blades for modern wind turbines suffer from trailing edge noise generated by the airflow passing over the aerodynamic profile of the wind turbine blade. The airflow transforms from a substantially laminar airflow into a turbulent airflow over the suction and pressure sides which separates from the local boundary layer at a separation point. This generates vortices behind the trailing edge which generate a wake effect and associated hissing sounds at about one kilohertz (kHz).

It is known to integrate a noise reducing profile into the trailing edge section of the wind turbine blade. However, this increases the complexity of the lay-up process and adds additional steps to the manufacturing process. Another way of solving this problem is to attach one or more noise reducing devices at or near the trailing edge of the wind turbine blade. These noise reducing devices normally comprise a plurality of serrations projecting from one or more base plates. However, they suffer from loss of noise reduction performance, particularly when the serrations are not aligned with the main flow direction.

WO 2016/001420 A1 discloses a wind turbine blade with a plurality of serrations projecting outwards from the trailing edge of the wind turbine blade. A pair of vanes, i.e. two vanes, is positioned on each serration, symmetrically arranged relative to the centre line of the serration. The vanes have a U-shaped profile placed over the peripheral edge of the serration, wherein each leg of this profile extends partly along the side surface of the serration towards the trailing edge. The local height of each leg is equal to or is greater than the thickness of the local boundary layer on that side at the trailing edge. The two vanes are spaced apart by half of the width of the serration. The respective vanes are aligned with the main flow direction and thus project perpendicularly relative to the trailing edge.

US 2015/078896 A1 also discloses a wind turbine blade with a plurality of serrations projecting outwards from the trailing edge of the wind turbine blade. The serrations are bent towards a pressure or suction side relative to the chord line of the wind turbine blade. Two types of vanes are positioned on each serration; two small vanes and two large vanes are symmetrically arranged relative to the centre line of the serration. Both types of vanes have a triangular or elliptical shaped cross-sectional profile and project from the same pressure or suction side of the serration.

US 2015/0247487 A1 discloses another wind turbine blade with a plurality of serrations projecting outwards from the trailing edge of the wind turbine blade. The serrations each has an integrated rib element projecting from one side surface of the serration. The ribs and serrations are made using a three-dimensional printer. The rib is aligned with the centreline of the serration and thus projects perpendicularly from the trailing edge. It is stated that the rib is specifically designed to add structural stiffness to the serrations to prevent oscillation of the serrations.

EP 2940292 A1 discloses a vortex generator device having an I-shaped or U-shaped cross-sectional profile, wherein the vortex generator device is arranged on the suction side at a chordwise distance from the leading edge. The maximum height found at the local leading edge of the vortex generator device exceeds the local boundary layer thickness.

US 2010/0143144 A1 discloses fins having an cured profile in the chordwise direction, wherein the fins are arranged on the suction side and the local leading edge of the fins are preferably placed at a chordwise distance of 50% to 90% from the leading edge. In a preferred embodiment, the intermediate distance between adjacent fins is 2 to 8 times the local boundary layer thickness and the height of the fins is 50% to 75% of the local boundary layer thickness.

WO 2015/192915 A1 discloses an array of noise reducing devices arranged on the suction side at the trailing edge. Each device has a set of bars with a noise reducing shield where the bars are connected via a spacer part to a base part. The base part is attached to the wind turbine blade while the spacer part ensures that the bars are placed at a distance of 1mm to 4cm from the blade surface.

### Object of the invention

An object of the invention is to provide a noise reducing device and a wind turbine blade that solves the abovementioned problems.

Another object of the invention is to provide a noise reducing device and a wind turbine blade that lowers the scattering efficiency at trailing edge of wind turbine blade.

Yet another object of the invention is to provide a noise reducing device and a wind turbine blade that minimises the loss of noise reduction performance.

Another further object of the invention is to provide a noise reducing device and a wind turbine blade that provides an improved noise reduction at the trailing edge.

### Detailed description of the invention

An object of the invention is achieved by a noise reducing device for a wind turbine blade according to claim 1.

This provides a noise reducing device which combines the effects of noise reducing elements with the effect of airflow modifying elements. This configuration lowers the scattering efficiency of the original trailing edge of the wind turbine blade as well as minimises the loss of noise reduction performance caused by the misalignment of the modified airflow. This configuration further provides an improved noise reduction effect compared to conventional noise reducing devices.

The dimensions of the projecting U-shaped vane pair of WO 2016/001420 A1 provide two relative large vanes which affect the modified airflow in the entire thickness of the local boundary layer. These large vanes increase the drag and thus have a negative impact on the aerodynamic performance of the wind turbine blade. Wind tunnel tests have shown that the majority of the energy of the vortices affecting the unsteady surface pressure at the trailing edge and thus the generation of trailing edge noise are concentrated in the lower half of the boundary layer, i.e. towards the side surface of the wind turbine blade. Therefore, it has surprisingly been found that the height of the airflow modifying element can be reduced without adversely affecting the effect of the airflow modifying element.

A local height of the airflow modifying element is measured from a side surface of the noise reducing element to a top of the airflow modifying element. A total height of the airflow modifying elements is measured between opposite facing tops of airflow modifying elements located on opposite side surfaces of the noise reducing element. The local and/or total height may be selected dependent on the thickness of the local boundary layer at a longitudinal position and/or chordwise position on the wind turbine blade at which the noise reducing device is installed and/or dependent on the aerodynamic profile of the wind turbine blade. In example, the local height may be equal to or less than two-thirds of the local boundary layer thickness. In example, but not limited to, the local height may be between one-third and two-thirds of the local boundary layer thickness. In example, but not limited to, the local height may be about one-half of the local boundary layer thickness. This allows the airflow modifying elements to control the direction of the airflow, thereby directing the exiting airflow to be more or less in line with the main flow direction. This configuration also saves material and reduces the loadings on the airflow modifying elements. This configuration further reduces the drag of the airflow modifying elements compared to the vane pair of WO 2016/001420 A1.

It is known to the skilled person that the local boundary layer thickness distribution at the trailing edge varies in the spanwise direction. The local boundary layer thickness can be easily extracted using any simulation techniques. For example, the local boundary layer thickness may be determined using a panel method, such as XFOIL^{®} or PROFILE^{®}. For example, the boundary layer thickness may be determined when the wind turbine blade is operated at a rated rotational speed (rpm), preferably without said noise reducing device.

According to a first special embodiment, the at least one airflow modifying element comprises at least two airflow modifying elements arranged at a distance from each other, the distance is equal to or less than one-third of the local boundary layer thickness.

A number of airflow modifying elements may be arranged on each noise reducing element in a predetermined pattern in a longitudinal and/or transverse direction. The longitudinal direction of the noise reducing device corresponds to the spanwise direction of the wind turbine blade when installed. The transverse direction of the noise reducing device corresponds to the chordwise direction of the wind turbine blade when installed.

In example, one airflow modifying element may be arranged on one or both side surfaces of the noise reducing element. This divides the airflow into two modified airflows. In example, at least two airflow elements may be arranged on one or both side surfaces of the noise reducing element. Said at least two airflow elements may be equally spaced, or the spacing may vary between individual airflow elements. The number of airflow modifying elements may be selected dependent of the local boundary layer thickness and/or the local width of the serrations. This divides the airflow into a plurality of modified airflows which exits along peripheral edge of the noise reducing element. This also allows the number of individual airflow modifying elements to be adapted to the dimensions of each respective noise reducing element.

In one example, a first airflow modifying element may be positioned at a distance from at least a second airflow element, wherein said distance may be measured in the longitudinal direction. The wind tunnel tests have further shown that the spacing, i.e. distance, between the individual airflow modifying elements have a significant influence on the performance of the modified airflows. Therefore, it has surprisingly been found that the effect of the airflow modifying element can be further improved by lowering the spacing compared the vane pair of WO 2016/001420 A1.

In example, the distance may be equal to or less than one-third of the local boundary layer thickness. In example, but not limited to, the distance may be between one-fourth and one-tenth of the local boundary layer thickness. In example, but not limited to, the distance may be about one-sixth of the local boundary layer thickness. This provides the greatest effect and thus allowing for the best control of the modified airflows.

The noise reducing device can thus be manufactured with a standardised spacing between the individual airflow modifying elements, which allows for a simple and fast manufacturing process. A kit or set of noise reducing devices may be provided, wherein each noise reducing device has a different spacing between its airflow modifying elements. A particular noise reducing device can thus be selected for installation at a selected position along the trailing edge of a particular wind turbine blade.

According to a second special embodiment, the at least one airflow modifying element comprises at least two airflow modifying elements arranged at a distance from each other, the distance is determined as function of characteristics of a trailing edge noise or of said local boundary layer.

The distance may alternatively or additionally be determined as function of the trailing edge noise characteristics and/or of the boundary layer characteristics at the trailing edge. These characteristics may be defined by one or more measurable or quantifiable parameters descriptive of the aerodynamic or acoustic characteristics.

In example, the acoustic characteristics may comprise at least a main frequency or frequency range having the highest noise level, i.e. amplitude value or averaged amplitude value. The acoustic characteristics may comprise one or more further relevant parameters, e.g. other frequencies and/or amplitude values, which can be used to determine the distance. The distance may thus be determined based on the main frequency or frequency range, e.g. in combination with the other relevant parameters. This allows the arrangement of airflow modifying elements to be adapted to the trailing edge noise characteristics.

The abovementioned frequencies, amplitude values and other parameters may be determined using any type of model descriptive of the trailing edge noise, e.g. an aeroacoustic model. In example, but not limited to, the aeroacoustic model may include the BPM-model, the TNO-Blake model or computational aerodynamics (e.g. Ffowcs-Williams and Hawkings equation). Other known techniques, such as measurements or simulations, may also be used to determine or estimate the respective parameters of the trailing edge noise.

In example, the aerodynamic characteristics may comprise at least a velocity, e.g. convection velocity, of the turbulent airflow at one or more heights. The aerodynamic characteristics may comprise one or more further relevant parameters, e.g. temperatures, pressures and/or air density, which can be used to determine the distance. The distance may thus be determined based on the velocity, e.g. in combination with the other relevant parameters. The spacing between the individual airflow modifying elements can thus be adapted according to the aerodynamic characteristics of the local boundary layer.

The abovementioned velocities and other parameters may be determined using any type of model of the boundary layer characteristics, e.g. an aerodynamic model. Alternatively, a combined model descriptive of both the aerodynamic and acoustic characteristics may be used. In example, but not limited to, the aerodynamic model may include panel methods (e.g. XFOIL^{®}), analytic methods (e.g. Corcos model), or computational fluid dynamic methods (e.g. RANS, LES or a hybrid thereof). Other known techniques, e.g. measurements or simulations, may also be used to determine or estimate the respective parameters of the local boundary layer.

The noise reducing device can thus be customised for a particular site, a particular aerodynamic blade profile, and/or a particular location of the wind turbine blade. The efficiency of the noise reducing device can thereby be tuned according to the actual aerodynamic or acoustic characteristics.

According to one embodiment, the at least one airflow modifying element comprises at least one outermost airflow modifying element and at least one innermost airflow modifying element, wherein a first length of the at least one innermost airflow modifying element is greater than a second length of the at least one outermost airflow modifying element.

A local length of each airflow modifying element is measured from a local first end facing the first end of the noise reducing device to a local second end facing the second end of the noise reducing device. When installed, the local first end face towards the leading edge of the wind turbine blade and the local second end face in the opposite direction, i.e. away from the trailing edge.

The number of airflow modifying elements may each have the same local length or a local length which varies gradually along a local width of the noise reducing element. The noise reducing element further has a local length measured between the second end, e.g. a tip, and a proximal end of the noise reducing device. The total length of the noise reducing device is measured from the first end to the second end.

An innermost airflow modifying element defines a first length while an outermost airflow modifying element defines a second length. Any number of intermediate airflow modifying elements arranged between the innermost and outermost airflow modifying elements, and may have a local length which is equal to or greater the second length. Alternatively, the intermediate airflow modifying elements may have a local length which is smaller than the second length.

The wind tunnel tests have also shown that the local length, e.g. the first and second lengths, of the individual airflow modifying elements has a minimal influence on the performance of the modified airflows. Therefore, it has surprisingly been found that the local length of the airflow modifying element can be changed, e.g. lowered, without adversely affecting the effect of the airflow modifying element compared to the noise reducing device of WO 2016/001420 A1. This may result in less drag and increased structural strength and also a simpler and faster manufacturing process.

According to a third special embodiment, said local first end is arranged at the first end or at the proximal end, and said local second end is arranged at a first or second peripheral edge of the at least one noise reducing element.

The airflow modifying element may extend from the peripheral edge of the noise reducing element to the proximal end or the first end. The local first end may alternatively be positioned at a distance from the proximal end or the first end. The local second end may alternatively be positioned at a distance from the peripheral edge. The airflow modifying element may thus have a substantially straight profile. The airflow modifying element may thus extend partly or fully along the side surface without projecting beyond the peripheral edge. This guides and thus controls the modified airflow along the length of airflow modifying elements.

Additionally or alternatively, the airflow modifying element may project beyond the peripheral edge and from a freely projecting portion located on the pressure or suction side of the noise reducing element. This freely projecting portion may optionally have a sub-portion extending into the opposite side of the noise reducing element. The airflow modifying element may thus have a substantially L-shaped profile. This guides and thus controls the modified airflow beyond the peripheral edge to a point located in the wake, thereby extending the effect of airflow modifying elements. This allows an airflow modifying element located on one side surface to partly guide and controls the modified airflow on the opposite side surface.

The abovementioned profiles of the outermost airflow modifying elements may thus have a shorter local length than the pair of vanes in WO 2016/001420 A1. Further, the above-mentioned profiles of the innermost airflow modifying elements may thus have a larger local length than the pair of vanes in WO 2016/001420 A1.

According to a fourth special embodiment, the at least one noise reducing element has a first side surface, a second side surface and a first or second peripheral edge, where said at least one airflow modifying element extends over said first or second peripheral edge so that said local first end is arranged at the first end or proximal end of said first side surface and said local second end is arranged at the first end or proximal end of said second side surface.

In yet another example, the airflow modifying element may extend around the peripheral edge and thus extend partly or fully along the opposite side surface. The airflow modifying element may thus have a substantially U-shaped profile. This allows the airflow modifying element guides and controls the modified airflow on both side surfaces.

The sub-length of the freely projection portion in the abovementioned examples may substantially correspond to the local boundary layer thickness.

According to one embodiment, said local height of the at least one airflow modifying element is substantially constant between the local first and second ends, or said local height of the at least one airflow modifying element tapered from the local first or second end towards the other local end.

The airflow modifying element may have a substantially uniform cross-sectional profile between the local first and second ends, thus having a substantially constant height along its length. This allows for a simple and fast manufacturing process, e.g. using thermoforming or injection moulding.

The airflow modifying element may alternatively have a tapered cross-sectional profile which tapers from the local first end towards the local second end, or vice versa. The tapered profile may instead taper from at least one intermediate point towards the local first end and/or the local second end. In example, but not limited to, the airflow modifying element may have a rectangular, a convex, a trapezoid, a semi-circular or a semi-elliptical profile. This allows the cross-sectional profile of the airflow modifying element to be adapted to the aerodynamic blade profile and/or the boundary layer profile. This reduces drag and allows the noise reducing elements to reduce noise more effectively.

The airflow modifying element may further have a substantially uniform or tapered cross-sectional profile in the longitudinal direction. The tapered profile may taper from the side surface of the noise reducing element towards the free tip of the airflow modifying element, or vice versa. In example, but not limited to, the airflow modifying element may have a rectangular, a convex, a trapezoid, a semi-circular or a semi-elliptical cross-sectional profile. This further allows the cross-sectional profile of the airflow modifying element to be adapted to the aerodynamic blade profile and/or the boundary layer profile. The cross-sectional profile may also be selected to ensure a strong attachment to the side surface and/or to reduce the flexibility of the airflow modifying element.

According to one embodiment, said top of the at least one airflow modifying element at the local first end and/or the local second end had a rounded edge in a plane defined by the at least one airflow modifying element.

The respective corners of the local first and/or second ends may comprise a rounded or elliptical edge. The corner(s) may alternatively comprise as a straight edge which positioned in an inclined angle relative to the longitudinal direction or the side surface of the noise reducing element. This reduces the drag force and allows for a more optimal airflow around the first and second ends.

According to one embodiment, the at least one airflow modifying element has a substantially straight or curved profile extending between the local first end and the local second end, wherein said straight or curved profile is arranged in a predetermined angle relative to the proximal end.

The airflow modifying elements in the transverse direction may have a substantially straight profile, wherein the local first and second ends may be substantially aligned in the transverse direction. This straight profile may be aligned with the main flow direction, e.g. placed perpendicularly relative to the proximal end. Alternatively, this straight profile may be positioned in an inclined angle relative to the proximal end. The airflow modifying elements may also have a curved profile, wherein the local second end is offset relative to the first end, or vice versa. The local first or second end may curve towards or away from the centreline of the noise reducing element. This allows the modified airflow to be guided towards or away from the centreline dependent on the orientation of the airflow modifying elements. This configuration contributes to substantially aligning the modified airflow with the main flow direction when the noise reducing elements are misaligned and thereby reducing the negative affect on the passing airflow.

According to one embodiment, a first airflow modifying element located on the first side surface is aligned with or offset in a longitudinal direction relative to a second airflow modifying element located on the second side surface.

A first number of first airflow modifying elements may be arranged on a first side surface, e.g. the pressure side, of the noise reducing element. A second number of second airflow modifying elements may be arranged on a second side surface, e.g. the suction side, of the noise reducing element. The first and second numbers may be the same or differ from each other. The numbers of first and second airflow modifying elements may be selected dependent of the desired spacing, the local width of the serrations and/or the frequencies of the trailing edge noise as mentioned earlier.

The first and second airflow modifying elements may be aligned so the local modified airflows on the pressure and suction sides exit at the same location seen in the longitudinal or spanwise direction. This reduces the amount of turbulence generated by the airflow modifying elements themselves.

Alternatively, the first and second airflow modifying elements may be offset relative to each other so the local modified airflows on the pressure and suction sides exit at different locations seen in the longitudinal or spanwise direction. This allows the respective local airflows on the pressure and suction sides to mix when exiting the noise reducing device. This may further reduce the coherent patterns in the existing airflows and further reduce the scattering efficiency of the trailing edge.

According to the invention, said at least one noise reducing element is serrations and said at least one airflow modifying element is vanes.

The noise reducing elements may be, but not limited to, shaped as serrations. The serrations may have a substantially triangular, elliptical or semi-circular profile. This changes the original trailing edge profile from a substantially straight edge to an alternating edge. This reduces the scattering efficiency and the generated trailing edge noise of the original trailing edge.

The noise reducing elements may be aligned with a base part to form a substantially straight noise reducing device. Alternatively, the noise reducing elements may be bend towards the pressure or suction side and thus placed in an inclined angle relative to the base part. Said angle may be between 1 degree and 45 degrees, e.g. between 5 degree and 30 degrees.

The airflow modifying elements may be, but not limited to, shaped as vanes. Here, the term "vane" is defined as any elongated elements or structure having a substantially slender cross-sectional profile seen in the transverse direction. The airflow modifying elements, e.g. vanes, may be formed by a single continuous element or structure or a plurality of sub-elements or structures which together forms the vane.

The airflow modifying elements may be manufactured separately from the noise reducing elements. The airflow modifying elements may thus be attached to the noise reducing element, e.g. using adhesive, fasteners like bolts or screws, a press fit, a mechanical coupling or another suitable attachment technique. This allows the use of different manufacturing processes and allows for replacement of the airflow modifying elements.

The airflow modifying elements may also be integrated into the noise reducing elements, e.g. using injection moulding, thermoforming or another suitable manufacturing technique. This adds structural strength to the noise reducing device and reduces the flexibility of the noise reducing elements.

The noise reducing elements and/or the airflow modifying elements may be made of a flexible material, such as thermoplastics, composite materials, polymer or other suitable materials or composites. The noise reducing elements and/or the airflow modifying elements may be made of a rigid material or composite, such as fibre reinforced materials or composites or metals. This reduces the fluttering of the serrations/vanes during operations.

An object of the invention is additionally achieved by a wind turbine blade, the wind turbine blade extends in a spanwise direction from a blade root to a tip end and in a chordwise direction from a leading edge to a trailing edge, the wind turbine blade comprises an aerodynamic profile having a first side surface and a second side surface, characterised in that at least one noise reducing device as described above is installed on the first or second side surface relative to the trailing edge or at the trailing edge, e.g. on a trailing edge surface.

This provides a wind turbine blade with improved trailing edge noise reduction compared to the use of other conventional noise reducing devices, such as WO 20116/001420 A1. This also allows for the design of longer and faster-rotating wind turbine blades. This may, in turn, result in an increase in the annual energy production (AEP) by about 1%.

The noise reducing device described above is capable of reducing the trailing edge noise by about 9 dB to 10 dB compared to a wind turbine blade without any noise reducing devices.

An array of noise reducing devices may be arranged in the spanwise direction along a part of the trailing edge. The array may comprise two or more of noise reducing devices, e.g. all or some of these noise reducing devices may be configured as described above. In example, the array may be located between the spanwise position of maximum chord length and the tip end. In example, but not limited to, the array may be located in the outer half of the wind turbine blade.

The number of airflow modifying elements and/or the local height of said airflow modifying elements located on each noise reducing element may be the same or differ. The total number of airflow modifying elements and/or the individual local heights thereof may thus be optimised within the same noise reducing device.

Alternatively or additionally, the number of airflow modifying elements and/or the local height of said airflow modifying elements of each noise reducing device within the above-mentioned array may be the same or differ. The configuration of each noise reducing device may thus be optimised within the same array as described above.

The trailing edge is a substantially sharp trailing edge or a blunt trailing edge having a trailing edge surface. The proximal end of said noise reducing device is aligned with or retracted relative to the sharp trailing edge or the trailing edge surface.

### Description of drawings

The invention is explained in detail below with reference to embodiments shown in the drawings, in which
- Fig. 1: shows a wind turbine,
- Fig. 2: shows an exemplary embodiment of the wind turbine blade,
- Fig. 3: shows a perspective view of a first exemplary embodiment of a noise reducing device according to the invention,
- Fig. 4: shows another perspective view of the noise reducing device of fig. 3,
- Fig. 5: shows the noise reducing device of fig. 3 seen from the second end,
- Fig. 6: shows a second exemplary embodiment of the second noise reducing device seen from the second side surface,
- Fig. 7: shows the second noise reducing elements of fig. 6 seen from the first side surface,
- Fig. 8: shows a cross-sectional view of a third exemplary embodiment of the noise reducing device,
- Fig. 9: shows a cross-sectional view of a fourth exemplary embodiment of the noise reducing device,
- Fig. 10: shows a cross-sectional view of the wind turbine blade with the noise reducing device installed at the trailing edge.
- Figs. 11a-c: show three different embodiments of the local second end, and
- Figs. 12a-b: shows two different embodiments of the airflow modifying elements.

### List of references

1. Wind turbine
2. Wind turbine tower
3. Nacelle
4. Hub
5. Wind turbine blades
6. Pitch bearing
7. Blade root
8. Tip end
9. Leading edge
10. Trailing edge
11. Blade shell
12. Pressure side
13. Suction side
14. Blade root portion
15. Aerodynamic blade portion
16. Transition portion
17. Length of wind turbine blade
18. Chord length of wind turbine blade
19. Noise reducing device
20. Second side surface
21. First end of noise reducing element
22. Second end of noise reducing element
23. Base part
24. Proximal end
25. Noise reducing elements
26. Airflow modifying elements
27. Innermost airflow modifying element
28. Outermost airflow modifying element
29. First side surface
30. First peripheral edge
31. Second peripheral edge
32. First end of airflow modifying element
33. Second end of airflow modifying element
34. Installation surface
35. Airflow modifying elements
36. Centreline
   L_{1a-b} First local lengths of innermost first and second airflow modifying elements
   L_{2a-b} Second local lengths of outermost first and second airflow modifying elements
   h_{a-b} Local heights of first and second airflow modifying elements t_{b} Local boundary layer thickness
   w_{1a-b} Distances between adjacent first and second airflow modifying elements
   w_{2a-b} Distances between outermost first and second modifying elements
   w₃ Local width of noise reducing element

The listed reference numbers are shown in abovementioned drawings where no all reference numbers are shown on the same figure for illustrative purposes. The same part or position seen in the drawings will be numbered with the same reference number in different figures.

### Detailed description of the drawings

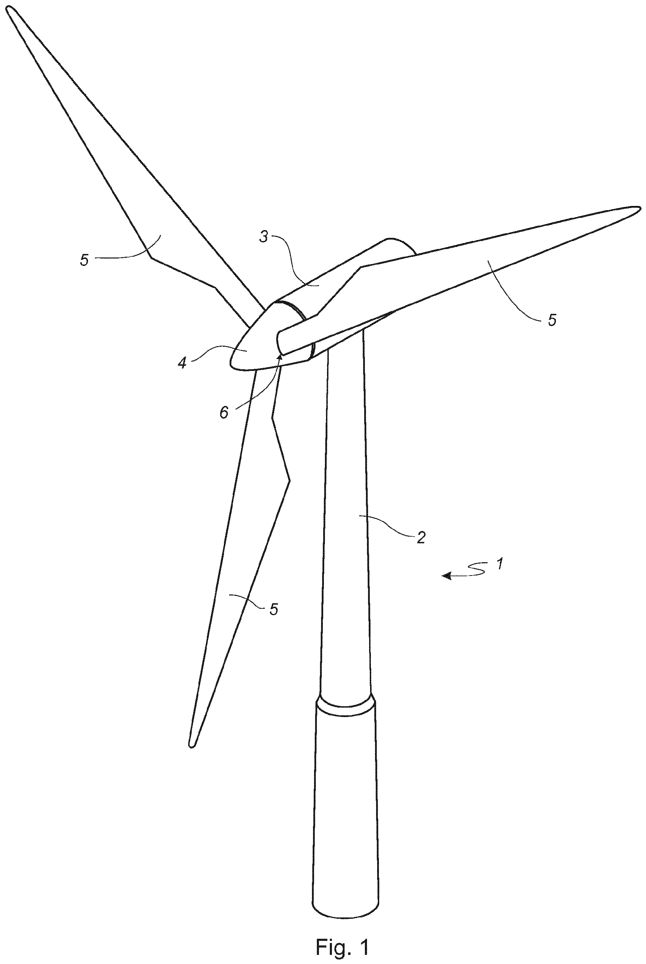

Fig. 1 shows a modern wind turbine 1 comprising a wind turbine tower 2, a nacelle 3 arranged on top of the wind turbine tower 2, and a rotor defining a rotor plane. The nacelle 3 is connected to the wind turbine tower 2, e.g. via a yaw bearing unit. The rotor comprises a hub 4 and a number of wind turbine blades 5. Here three wind turbine blades are shown, but the rotor may comprise more or fewer wind turbine blades 5. The hub 4 is connected to a drive train, e.g. a generator, located in the wind turbine 1 via a rotation shaft.

The hub 4 comprises a mounting interface for each wind turbine blade 5. A pitch bearing unit 6 is optionally connected to this mounting interface and further to a blade root of the wind turbine blade 5.

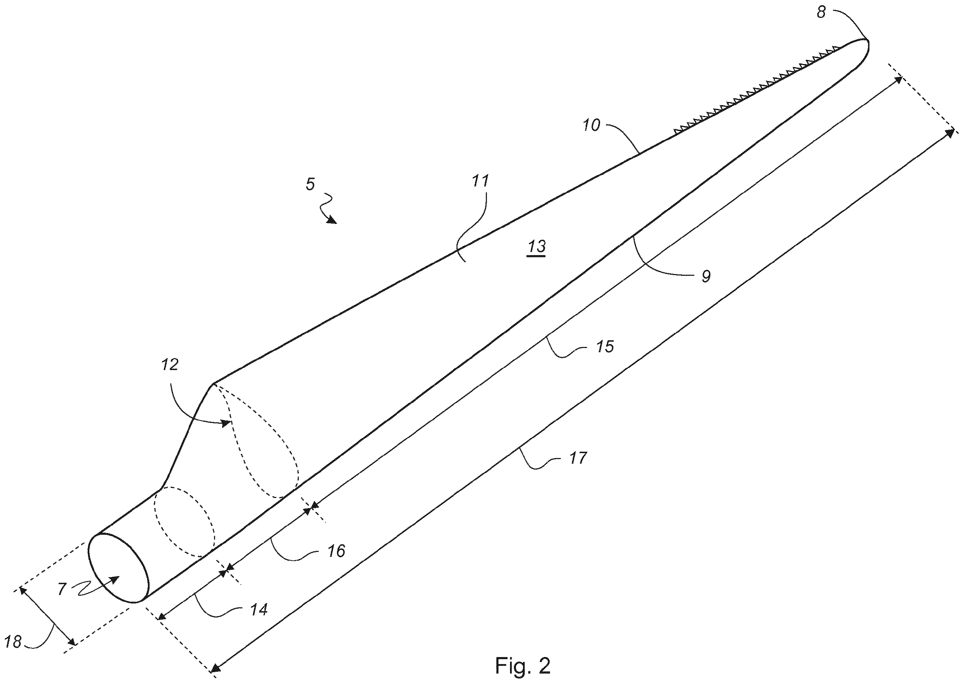

Fig. 2 shows a schematic view of the wind turbine blade 5 which extends in a longitudinal direction from a blade root 7 to a tip end 8. The wind turbine blade 5 further extends in a chordwise direction from a leading edge 9 to a trailing edge 10. The wind turbine blade 5 comprises a blade shell 11 having two opposite facing side surfaces defining a pressure side 12 and a suction side 13 respectively. The blade shell 11 further defines a blade root portion 14, an aerodynamic blade portion 15, and a transition portion 16 between the blade root portion 14 and the aerodynamic blade portion 15.

The blade root portion 14 has a substantially circular or elliptical cross-section (indicated by dashed lines). The blade root portion 14 together with a load carrying structure, e.g. a main laminate combined with a shear web or a box beam, are configured to add structural strength to the wind turbine blade 5 and transfer the dynamic loads to the hub 4. The load carrying structure extends between the pressure side 12 and the suction side 13 and further in the longitudinal direction.

The blade aerodynamic blade portion 15 has an aerodynamically shaped cross-section (indicated by dashed lines) designed to generate lift. The cross-sectional profile of the blade shell 11 gradually transforms from the circular or elliptical profile into the aerodynamic profile in the transition area 16.

The wind turbine blade 5 has a longitudinal length 17 of at least 35 metres, preferably at least 50 metres. The wind turbine blade 5 further has a chord length 18 as function of the length 17, wherein the maximum chord length is found between the blade aerodynamic blade portion 15 and the transition area 16.

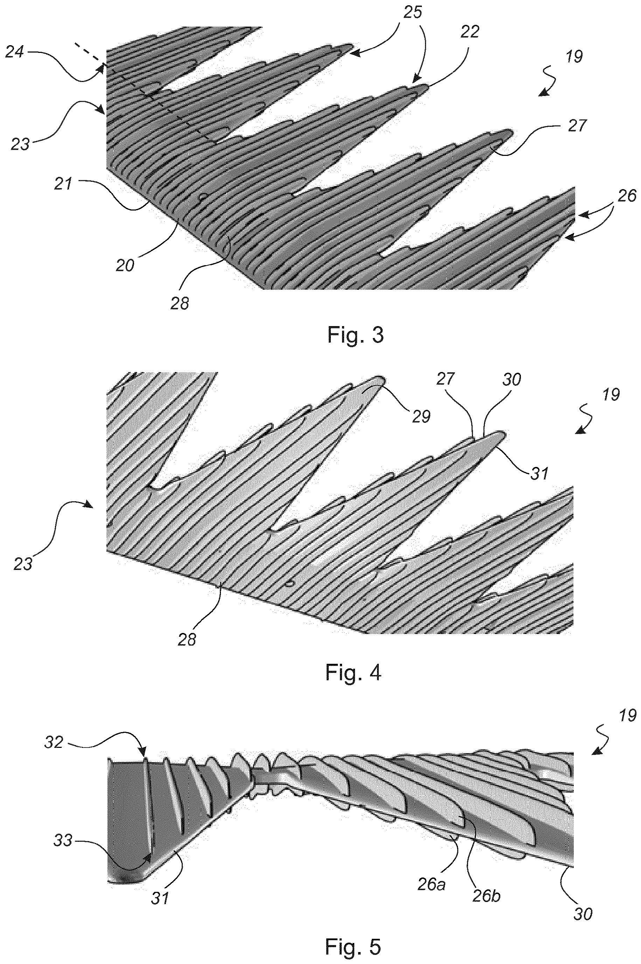

Figs. 3-4 show a first exemplary embodiment of a noise reducing device 19 configured to be installed on the wind turbine blade 5. The noise reducing device 19 has a first side surface (see fig. 4), a second side surface (see fig. 4), a first end 21 and a second end 22.

The noise reducing device 19 comprises a base part 23 extending from the first end 21 to a proximal end 24 and a number of noise reducing elements 25 extending from the proximal end 24 towards the second end 22. Here the noise reducing elements 25 are shaped as serrations for lowering the scattering efficiency of the trailing edge 10.

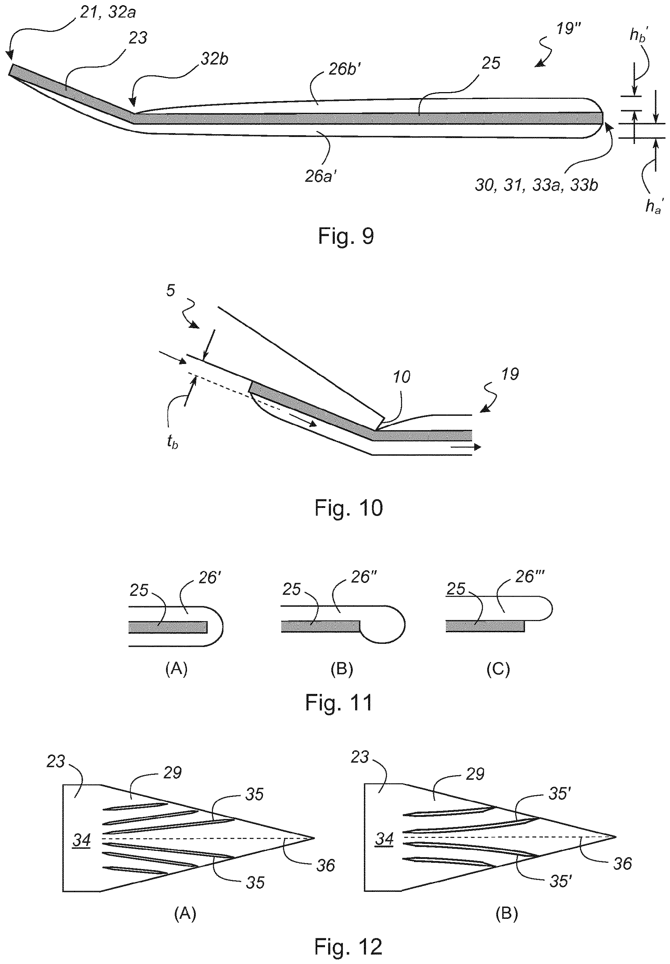

The noise reducing device 19 further comprises a number of airflow modifying elements 26 extending from the respective side surfaces of the noise reducing elements 25. An innermost airflow modifying element 27 is located closest to a centreline (see fig. 12a-b) of the noise reducing element 25. An outermost airflow modifying element 28 is located farthest to a centreline (see fig. 12a-b) of the noise reducing element 25. Here, the airflow modifying elements 26 are shaped as vanes for controlling the direction of the existing airflow and substantially aligning it with a main flow direction of the wind turbine blade 5.

A first number of first airflow modifying elements project from the first side surface 29 of the noise reducing element 25, as illustrated in fig. 4. A second number of second airflow modifying elements project from the second side surface 20 of the noise reducing element 25, as illustrated in fig. 3. Here, ten airflow modifying elements are on either side of the serrations.

Fig. 5 shows the noise reducing device 19 seen from the second end 22. Each noise reducing element 25 has a first peripheral edge 30 and a second peripheral edge 31. The first and second peripheral edges 30, 31 of adjacent noise reducing elements 25 form a gap between the tips of said adjacent noise reducing elements 25, as illustrated in fig. 5.

The airflow modifying elements 26 have a local length measured from a local first end 32 to a local second end 33. The first airflow modifying elements 26a arranged on the first side surface 29 are aligned in a longitudinal direction with the second airflow modifying elements 26b arranged on the second side surface 20. The local first and second ends 32, 33 are further aligned in a transverse direction and thus the airflow modifying element 26 has a straight profile. The local modified airflows on the pressure and suction sides of the wind turbine blade 5 thus exist the noise reducing device 19 at the same location.

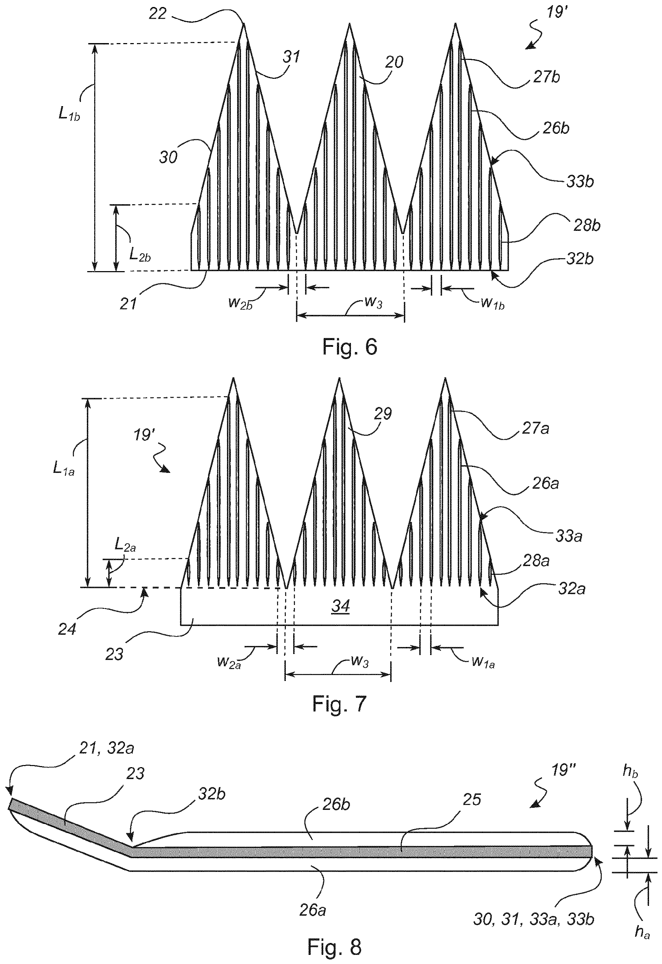

Fig. 6 shows a second exemplary embodiment of the second noise reducing device 19' seen from the second side surface 20. Here, the local first end 32b of the second airflow modifying elements 26b are arranged at the first end 21. The local second end 33b of the second airflow modifying elements 26b are arranged at the first or second peripheral edge 30, 31.

The noise reducing element 25 has a local width, w₃, measured in the longitudinal direction and a local length in the longitudinal direction measured from the proximal 24 to its tip, e.g. the second end 22.

As illustrated in fig. 6, the local length of the second airflow modifying elements 26b varies along the local width w₃. The innermost 27b of the second airflow modifying elements 26b has a first length, L_{1b}, and the outermost 28b of the second airflow modifying elements 26b has a second length, L_{2b}. The local lengths of remaining second airflow modifying elements 26b gradually changes between the first and second lengths L_{1b}, L_{2b}, as illustrated in fig. 6.

The individual second airflow modifying elements 26b on the respective noise reducing element 25 are spaced apart by a local distance w_{1b} measured between the centrelines or opposite facing side surfaces of two adjacent second airflow modifying elements 26b. The outermost second airflow modifying elements 28b on two adjacent noise reducing elements 25 are further spaced apart by another local distance w_{2b}. The local distances w_{1b}, w_{2b} can be the same or differ.

Fig. 7 shows the second noise reducing elements 19' seen from the first side surface 29. Here, the local first end 32a of the first airflow modifying elements 26a are arranged at the proximal end 24. The local second end 33a of the first airflow modifying elements 26a are arranged at the first or second peripheral edge 30, 31.

As illustrated in fig. 7, the local length of the second airflow modifying elements 26a varies along the local width w₃. The innermost 27a of the first airflow modifying elements 26a has a first length, L₁ₐ, and the outermost 28a of the first airflow modifying elements 26a has a second length, L₂ₐ. The local lengths of remaining first airflow modifying elements 26a gradually changes between the first and second lengths L₁ₐ, L₂ₐ, as illustrated in fig. 7.

The individual first airflow modifying elements 26a on the respective noise reducing element 25 are spaced apart by a local distance w₁ₐ measured between the centrelines or opposite facing side surfaces of two adjacent second airflow modifying elements 26a. The outermost first airflow modifying elements 28a on two adjacent noise reducing elements 25 are further spaced apart by another local distance w₂ₐ. The local distances w₁ₐ, w₂ₐ can be the same or differ.

The base part 23 has an installation surface configured to contact a matching contact surface on a side surface or a trailing edge surface of the wind turbine blade 5. The base part 23 and thus the noise reducing device 19 can be suitably attached, e.g. using an adhesive, to the wind turbine blade 5.

Fig. 8 shows a cross-sectional view of a third exemplary embodiment of the noise reducing device 19". Here, the first airflow modifying elements 26a have a local height, hₐ, measured from the first side surface 29 to its free tip facing away from the noise reducing element 25. The second airflow modifying elements 26b have further a local height, h_{b}, measured from the second side surface 20 to its free tip facing away from the noise reducing element 25. The local heights hₐ, h_{b} is substantially constant along the local lengths of the first and second airflow modifying elements 26a, 26b.

The noise reducing elements 25 are arranged in an inclined angle relative to the base part 23, as illustrated in fig. 8. By bending the noise reducing elements 25 can be substantially aligned with the main flow direction at the trailing edge 10 of the wind turbine blade 5.

The local second ends 33a, 33b of the first and second airflow modifying elements 26a, 26b are arranged at the peripheral edge 30, 31 of the noise reducing element 25. The local second ends 33a, 33b has a rounded profile in the plane define by the airflow modifying element 26.

The local first end 32b of the second airflow modifying element 26b is arranged at or near the proximal end 24 of the noise reducing device 19". The first airflow modifying element 26a extends past the proximal end 24 so that the local first end 32a of the first airflow modifying element 26a is arranged at the first end of the noise reducing device 19". The first airflow modifying elements 26a thus have a greater local length that the second airflow modifying elements 26b, as illustrated in figs. 6 and 7. The local first ends 32a, 32b has a greater rounded profile compared to the profile of the local second ends 33a, 33b.

Fig. 9 shows a cross-sectional view of a fourth exemplary embodiment of the second noise reducing device 19". Here, the local heights hₐ^{'}, h_{b}^{'} of both the first and second airflow modifying elements 26a, 26b taper from the local second ends 33a, 33b to the local first ends 32a, 32b.

Fig. 10 shows a cross-sectional view of the trailing edge area of the wind turbine blade 5. The noise reducing device 19 is installed, e.g. attached, to one side surface of the wind turbine blade, as illustrated in fig. 10.

The local airflow (indicated by arrows) passing along the side surface forms a local boundary layer (located between dashed line and side surface) having a local boundary layer thickness, t_{b}. The local airflow is guided along the airflow modifying elements 26 and exits at the second end 22, e.g. at the local second ends 33a, 33b. The thickness of this local boundary layer is typically defines as the distance from the side surface to the point at which the velocity of the turbulent airflow is 99% of the free stream velocity, U∞.

At least one of the local heights hₐ, h_{b}, the local lengths L₁ₐ, L_{1b} and the local distances w₁ₐ, w_{1b} is suitably determined as function of the local boundary layer thickness t_{b}. In example, the local heights hₐ, h_{b} are equal to or less than two-thirds of the local boundary layer thickness t_{b}. In example, the local distances w₁ₐ, w_{1b} are equal to or less than one-thirds of the local boundary layer thickness t_{b}.

Figs. 11a-c show three different embodiments of the local second end 33a, 33b. The local second end 33a, 33b can extend over the peripheral edge 30, 31, as illustrated in fig. 11a. The first and second airflow modifying elements 26a, 26b can thus be combined to form a substantially U-shaped profile.

The local second end 33a, 33b can form a free end portion projecting outwards from the peripheral edge 30, 31 and further have a free sub-portion which projects towards the opposite side surface, as illustrated in fig. 11b. The airflow modifying elements 26 can thus influence the local airflow located on that side surface and partly influence the local airflow located on the opposite side surface.

The local second end 33a, 33b can form a free end portion without any sub-portions projecting towards the opposite side surface, as illustrated in fig. 11c. The airflow modifying elements 26 thus influences only the local airflow located on that side surface.

Figs. 12a-b shows two different embodiments of the airflow modifying elements 35. The airflow modifying elements 35, e.g. the first and/or second airflow modifying elements, can have a straight profile which is positioned in an incline angle, as illustrated in fig. 12a. The inclined angle is measured either relative to the centreline 36 of the noise reducing element 25 or to the proximal end 24. Here, the local second ends 33a, 33b are angled away from the centreline 36, but they may instead be angled towards the centreline 36. This reduces the loss of noise reduction when the noise reducing elements 25 are not aligned with the main flow direction.

The airflow modifying elements 35, e.g. the first and/or second airflow modifying elements, can also have a curved profile. Here, the local second ends 33a, 33b are curving away from the centreline 36, but they may instead be curving towards the centreline 36. This also reduces the loss of noise reduction when the noise reducing elements 25 are not aligned with the main flow direction.

The abovementioned embodiments may be combined in any combinations without deviating from the present invention.

## Claims

1. A noise reducing device (19) for a wind turbine blade (5), having a first end (21), a second end (22), a first side surface (29) and a second side surface (20), the noise reducing device (19) comprises a base part (23) and at least one noise reducing element (25), the base part (23) is defined between the first end (21) and a proximal end (24) and the at least one noise reducing element (25) extends from said proximal end (24) of the base part (23) to the second end (22), the base part (23) is configured for attachment to a side surface adjacent to a trailing edge (10) of the wind turbine blade (5) or for attachment to a trailing edge surface of the wind turbine blade (5) so that the at least one noise reducing element (25) projects outwards from the trailing edge (10), when installed, wherein at least one airflow modifying element (26) projects from at least one side surface (20, 29) of the at least one noise reducing element (25), the at least one airflow modifying element (26) is configured to interact with a local boundary layer attached to said at least one side surface (20, 29) of the noise reducing device (19) when installed, wherein the at least one airflow modifying element (26) extends substantially in a transverse direction from a local first end (32) to a local second end (33), and the at least one noise reducing element (25) is serrations and said at least one airflow modifying element (26) is vanes and has a local height (hₐ, h_{b}) measured between said at least one side surface (20, 29) and a top of said airflow modifying element (26), **characterised in that** the local height (hₐ, h_{b}) is equal to or less than two-thirds of a local boundary layer thickness (t_{b}) at the noise reducing device (19) when installed, wherein the local boundary layer thickness (t_{b}) is determined when the wind turbine blade (5) is operated at a rated rotational speed.

2. A noise reducing device according to claim 1, **characterised in that** the at least one airflow modifying element (26) comprises at least two airflow modifying elements arranged at a distance (w₁) from each other, the distance (w₁) is equal to or less than one-third of the local boundary layer thickness (t_{b}).

3. A noise reducing device according to claim 1, **characterised in that** the at least one airflow modifying element (26) comprises at least two airflow modifying elements arranged at a distance (w₁) from each other, the distance (w₁) is determined as function of characteristics of a trailing edge noise or of said local boundary layer.

4. A noise reducing device according to any one of claims 1 to 3, **characterised in that** the at least one airflow modifying element (26) comprises at least one outermost airflow modifying element (28) and at least one innermost airflow modifying element (27), wherein a first length (L₁) of the at least one innermost airflow modifying element (27) is greater than a second length (L₂) of the at least one outermost airflow modifying element (28).

5. A noise reducing device according to any one of claims 1 to 4, **characterised in that** said local first end (32) is arranged at the first end (21) or at the proximal end (24), and said local second end (33) is arranged at a first or second peripheral edge (30, 31) of the at least one noise reducing element (25).

6. A noise reducing device according to any one of claims 1 to 4, **characterised in that** the at least one noise reducing element (25) has a first side surface (29), a second side surface (20) and a peripheral edge (30, 31), where said at least one airflow modifying element (26') extends over said first or second peripheral edge (30, 31) so that said local first end (32) is arranged at the first end (21) or proximal end (24) of said first side surface (29) and said local second end (33) is arranged at the first end (21) or proximal end (24) of said second side surface (20).

7. A noise reducing device according to any one of claims 1 to 6, **characterised in that** said local height (hₐ, h_{b}) of the at least one airflow modifying element (26) is substantially constant between the local first and second ends (32, 33), or said local height (hₐ, h_{b}) of the at least one airflow modifying element (26) tapered from the local first or second end (32, 33) towards the other local end.

8. A noise reducing device according to any one of claims 1 to 7, **characterised in that** said top of the at least one airflow modifying element (26) at the local first end (32) and/or the local second end (33) had a rounded edge in a plane defined by the at least one airflow modifying element (26).

9. A noise reducing device according to any one of claims 1 to 8, **characterised in that** the at least one airflow modifying element (26) has a substantially straight or curved profile extending between the local first end (32) and the local second end (33), wherein said straight or curved profile is arranged in a predetermined angle relative to the proximal end (24).

10. A noise reducing device according to any one of claims 2 to 9, **characterised in that** a first airflow modifying element (26a) located on the first side surface (29) is aligned with or offset in a longitudinal direction relative to a second airflow modifying element (26b) located on the second side surface (20).

11. A wind turbine blade, the wind turbine blade (5) extends in a longitudinal direction from a blade root (7) to a tip end (8) and in a chordwise direction from a leading edge (9) to a trailing edge (10), the wind turbine blade (5) comprises an aerodynamic profile having a first side surface and a second side surface, **characterised in that** at least one noise reducing device (19) according to any one of claims 1 to 10 is installed on the first or second side surface relative to the trailing edge (10) or at the trailing edge (10), e.g. on a trailing edge surface.

## Patentansprüche

1. Geräuschminderungsvorrichtung (19) für einen Windkraftanlagenflügel (5) mit einem ersten Ende (21), einem zweiten Ende (22), einer ersten Seitenoberfläche (29) und einer zweiten Seitenoberfläche (20), wobei die Geräuschminderungsvorrichtung (19) einen Basisteil (23) und mindestens ein Geräuschminderungselement (25) umfasst, der Basisteil (23) zwischen dem ersten Ende (21) und einem proximale Ende (24) definiert ist und sich das mindestens eine Geräuschminderungselement (25) von dem proximalen Ende (24) des Basisteils (23) zu dem zweiten Ende (22) erstreckt, wobei der Basisteil (23) zur Befestigung an einer einer Austrittskante (10) des Windkraftanlagenflügels (5) benachbarten Seitenoberfläche oder zur Befestigung an einer Austrittskantenoberfläche des Windkraftanlagenflügels (5) konfiguriert ist, sodass das mindestens eine Geräuschminderungselement (25), wenn installiert, von der Austrittskante (10) nach außen vorsteht, wobei mindestens ein Luftströmungsänderungselement (26) von mindestens einer Seitenoberfläche (20, 29) des mindestens einen Geräuschminderungselements (25) vorsteht, wobei das mindestens eine Luftströmungsänderungselement (26) dazu konfiguriert ist, mit einer an der mindestens einen Seitenoberfläche (20, 29) der Geräuschminderungsvorrichtung (19), wenn installiert, befesitgten lokalen Grenzschicht zu interagieren, wobei sich das mindestens eine Luftströmungsänderungselement (26) im Wesentlich in einer Querrichtung von einem lokalen ersten Ende (32) zu einem lokalen zweiten Ende (33) erstreckt, und es sich bei dem mindestens einen Geräuschminderungselement (25) um Zähne handelt und es sich bei dem mindestens einen Luftströmungsänderungselement (26) um Luftleitrippen handelt und es eine zwischen der mindestens einen Seitenoberfläche (20, 29) und einer Oberseite des Luftströmungsänderungselements (26) gemessene lokale Höhe (hₐ, h_{b}) aufweist, **dadurch gekennzeichnet, dass** die lokale Höhe (hₐ, h_{b}) gleich oder kleiner als zwei Drittel einer lokalen Grenzschichtdicke (t_{b}) an der Geräuschminderungsvorrichtung (19), wenn installiert, ist, wobei die lokale Grenzschichtdicke (t_{b}) bestimmt wird, wenn der Windkraftanlagenflügel (5) mit einer Nenndrehzahl betrieben wird.

2. Geräuschminderungsvorrichtung nach Anspruch 1, **dadurch gekennzeichnet, dass** das mindestens eine Luftströmungsänderungselement (26) mindestens zwei in einem Abstand (w₁) voneinander angeordnete Luftströmungsänderungselemente umfasst, wobei der Abstand (w₁) gleich oder kleiner als ein Drittel der lokalen Grenzschichtdicke (t_{b}) ist.

3. Geräuschminderungsvorrichtung nach Anspruch 1, **dadurch gekennzeichnet, dass** das mindestens eine Luftströmungsänderungselement (26) mindestens zwei in einem Abstand (w₁) voneinander angeordnete Luftströmungsänderungselemente umfasst, wobei der Abstand (w₁) als Funktion von Kennwerten eines Austrittskantengeräuschs oder der lokalen Grenzschicht bestimmt wird.

4. Geräuschminderungsvorrichtung nach einem der Ansprüche 1 bis 3, **dadurch gekennzeichnet, dass** das mindestens eine Luftströmungsänderungselement (26) mindestens ein äußerstes Luftströmungsänderungselement (28) und mindestens ein innerstes Luftströmungsänderungselement (27) umfasst, wobei eine erste Länge (L₁) des mindestens einen innersten Luftströmungsänderungselements (27) größer als eine zweite Länge (L₂) des mindestens einen äußersten Luftströmungsänderungselements (28) ist.

5. Geräuschminderungsvorrichtung nach einem der Ansprüche 1 bis 4, **dadurch gekennzeichnet, dass** das lokale erste Ende (32) an dem ersten Ende (21) oder an dem proximalen Ende (24) angeordnet ist und das lokale zweite Ende (33) an einer ersten oder einer zweiten Umfangskante (30, 31) des mindestens einen Geräuschminderungselements (25) angeordnet ist.

6. Geräuschminderungsvorrichtung nach einem der Ansprüche 1 bis 4, **dadurch gekennzeichnet, dass** das mindestens eine Geräuschminderungselement (25) eine erste Seitenoberfläche (29), eine zweite Seitenoberfläche (20) und eine Umfangskante (30, 31) aufweist, wobei sich das mindestens eine Luftströmungsänderungselement (26') über die erste oder die zweite Umfangskante (30, 31) erstreckt, sodass das lokale erste Ende (32) an dem ersten Ende (21) oder dem proximalen Ende (24) der ersten Seitenoberfläche (29) angeordnet ist und das lokale zweite Ende (33) an dem ersten Ende (21) oder dem proximalen Ende (24) der zweiten Seitenoberfläche (20) angeordnet ist.

7. Geräuschminderungsvorrichtung nach einem der Ansprüche 1 bis 6, **dadurch gekennzeichnet, dass** die lokale Höhe (hₐ, h_{b}) des mindestens einen Luftströmungsänderungselements (26) zwischen dem lokalen ersten Ende und dem lokalen zweiten Ende (32, 33) im Wesentlichen konstant ist oder die lokale Höhe (hₐ, h_{b}) des mindestens einen Luftströmungsänderungselements (26) von dem lokalen ersten Ende oder dem lokalen zweiten Ende (32, 33) in Richtung des anderen lokalen Endes abnimmt.

8. Geräuschminderungsvorrichtung nach einem der Ansprüche 1 bis 7, **dadurch gekennzeichnet, dass** die Oberseite des mindestens einen Luftströmungsänderungselements (26) an dem lokalen ersten Ende (32) und/oder dem lokalen zweiten Ende (33) in einer von dem mindestens einen Luftströmungsänderungselement (26) definierten Ebene eine gerundete Kante aufweist.

9. Geräuschminderungsvorrichtung nach einem der Ansprüche 1 bis 8, **dadurch gekennzeichnet, dass** das mindestens eine Luftströmungsänderungselement (26) ein im Wesentlichen gerades oder gekrümmtes Profil aufweist, das sich zwischen dem lokalen ersten Ende (32) und dem lokalen zweiten Ende (33) erstreckt, wobei das gerade oder gekrümmte Profil in einem vorgegebenen Winkel relativ zu dem proximalen Ende (24) angeordnet ist.

10. Geräuschminderungsvorrichtung nach einem der Ansprüche 2 bis 9, **dadurch gekennzeichnet, dass** ein auf der ersten Seitenoberfläche (29) befindliches erstes Luftströmungsänderungselement (26a) mit einem auf der zweiten Seitenoberfläche (20) befindlichen zweiten Luftströmungsänderungselement (26b) fluchtet oder in einer Längsrichtung relativ dazu versetzt ist.

11. Windkraftanlagenflügel, wobei sich der Windkraftanlagenflügel (5) in einer Längsrichtung von einer Flügelwurzel (7) zu einem Spitzenende (8) und in einer Sehnenrichtung von einer Eintrittskante (9) zu einer Austrittskante (10) erstreckt, wobei der Windkraftanlagenflügel (5) ein aerodynamisches Profil mit einer ersten Seitenoberfläche und einer zweiten Seitenoberfläche umfasst, **dadurch gekennzeichnet, dass** mindestens eine Geräuschminderungsvorrichtung (19) nach einem der Ansprüche 1 bis 10 auf der ersten oder der zweiten Seitenoberfläche relativ zu der Austrittskante (10) oder an der Austrittskante (10), z. B. auf einer Austrittskantenoberfläche, installiert ist.

## Revendications

1. Dispositif de réduction de bruit (19) pour une pale d'éolienne (5), ayant une première extrémité (21), une deuxième extrémité (22), une première surface latérale (29) et une deuxième surface latérale (20), le dispositif de réduction de bruit (19) comporte une partie de base (23) et au moins un élément de réduction de bruit (25), la partie de base (23) est définie entre la première extrémité (21) et une extrémité proximale (24) et ledit au moins un élément de réduction de bruit (25) s'étend depuis ladite extrémité proximale (24) de la partie de base (23) jusqu'à la deuxième extrémité (22), la partie de base (23) est configurée à des fins de fixation sur une surface latérale adjacente à un bord de fuite (10) de la pale d'éolienne (5) ou à des fins de fixation sur une surface de bord de fuite de la pale d'éolienne (5) de telle sorte que ledit au moins un élément de réduction de bruit (25) fait saillie vers l'extérieur depuis le bord de fuite (10), quand il est installé, dans lequel au moins un élément de modification de flux d'air (26) fait saillie depuis au moins une surface latérale (20, 29) dudit au moins un élément de réduction de bruit (25), ledit au moins un élément de modification de flux d'air (26) est configuré à des fins d'interaction avec une couche de limite locale fixée sur ladite au moins une surface latérale (20, 29) du dispositif de réduction de bruit (19) quand il est installé, dans lequel ledit au moins un élément de modification de flux d'air (26) s'étend sensiblement dans une direction transversale depuis une première extrémité locale (32) jusqu'à une deuxième extrémité locale (33), et ledit au moins un élément de réduction de bruit (25) est sous la forme de dentelures et ledit au moins un élément de modification de flux d'air (26) est sous la forme d'aubes et a une hauteur locale (hₐ, h_{b}) mesurée entre ladite au moins une surface latérale (20, 29) et une partie supérieure dudit élément de modification de flux d'air (26), **caractérisé en ce que** la hauteur locale (hₐ, h_{b}) est égale à ou inférieure à deux tiers d'une épaisseur (t_{b}) de la couche de limite locale au niveau du dispositif de réduction de bruit (19) quand il est installé, dans lequel l'épaisseur (t_{b}) de la couche de limite locale est déterminée quand la pale d'éolienne (5) fonctionne à une vitesse de rotation nominale.

2. Dispositif de réduction de bruit selon la revendication 1, **caractérisé en ce que** ledit au moins un élément de modification de flux d'air (26) comporte au moins deux éléments de modification de flux d'air agencés à une distance (w₁) l'un par rapport à l'autre, la distance (w₁) est égale ou inférieure à un tiers de l'épaisseur (t_{b}) de la couche de limite locale.

3. Dispositif de réduction de bruit selon la revendication 1, **caractérisé en ce que** ledit au moins un élément de modification de flux d'air (26) comporte au moins deux éléments de modification de flux d'air agencés à une distance (w₁) l'un par rapport à l'autre, la distance (w₁) est déterminée en fonction des caractéristiques de bruit d'un bord de fuite ou de ladite couche de limite locale.

4. Dispositif de réduction de bruit selon l'une quelconque des revendications 1 à 3, **caractérisé en ce que** ledit au moins un élément de modification de flux d'air (26) comporte au moins un élément de modification de flux d'air (28) se trouvant le plus à l'extérieur et au moins un élément de modification de flux d'air (27) se trouvant le plus à l'intérieur, dans lequel une première longueur (L₁) dudit au moins un élément de modification de flux d'air (27) se trouvant le plus à l'intérieur est supérieure à une deuxième longueur (L₂) dudit au moins un élément de modification de flux d'air (28) se trouvant le plus à l'extérieur.

5. Dispositif de réduction de bruit selon l'une quelconque des revendications 1 à 4, **caractérisé en ce que** ladite première extrémité locale (32) est agencée au niveau de la première extrémité (21) ou au niveau de l'extrémité proximale (24), et ladite deuxième extrémité locale (33) est agencée au niveau d'un premier ou deuxième bord périphérique (30, 31) dudit au moins un élément de réduction de bruit (25).

6. Dispositif de réduction de bruit selon l'une quelconque des revendications 1 à 4, **caractérisé en ce que** ledit au moins un élément de réduction de bruit (25) a une première surface latérale (29), une deuxième surface latérale (20) et un bord périphérique (30, 31), où ledit au moins un élément de modification de flux d'air (26') s'étend sur ledit premier ou deuxième bord périphérique (30, 31) de telle sorte que ladite première extrémité locale (32) est agencée au niveau de la première extrémité (21) ou extrémité proximale (24) de ladite première surface latérale (29) et ladite deuxième extrémité locale (33) est agencée au niveau de la première extrémité (21) ou extrémité proximale (24) de ladite deuxième surface latérale (20).

7. Dispositif de réduction de bruit selon l'une quelconque des revendications 1 à 6, **caractérisé en ce que** ladite hauteur locale (hₐ, h_{b}) dudit au moins un élément de modification de flux d'air (26) est sensiblement constante entre les première et deuxième extrémités locales (32, 33), ou ladite hauteur locale (hₐ, h_{b}) dudit au moins un élément de modification de flux d'air (26) qui va en s'effilant depuis la première ou deuxième extrémité locale (32, 33) vers l'autre extrémité locale.

8. Dispositif de réduction de bruit selon l'une quelconque des revendications 1 à 7, **caractérisé en ce que** ladite partie supérieure dudit au moins un élément de modification de flux d'air (26) au niveau de la première extrémité locale (32) et/ou de la deuxième extrémité locale (33) a un bord arrondi dans un plan défini par ledit au moins un élément de modification de flux d'air (26).

9. Dispositif de réduction de bruit selon l'une quelconque des revendications 1 à 8, **caractérisé en ce que** ledit au moins un élément de modification de flux d'air (26) a un profil sensiblement droit ou courbé s'étendant entre la première extrémité locale (32) et la deuxième extrémité locale (33), dans lequel ledit profil droit ou courbé est agencé selon un angle prédéterminé par rapport à l'extrémité proximale (24).

10. Dispositif de réduction de bruit selon l'une quelconque des revendications 2 à 9, **caractérisé en ce qu'**un premier élément de modification de flux d'air (26a) situé sur la première surface latérale (29) est aligné sur ou décalé dans une direction longitudinale par rapport à un deuxième élément de modification de flux d'air (26b) situé sur la deuxième surface latérale (20).

11. Pale d'éolienne, dans laquelle la pale d'éolienne (5) s'étend dans une direction longitudinale depuis un pied de pale (7) jusqu'à une extrémité de bout (8) et dans une direction allant dans le sens de la corde depuis un bord d'attaque (9) jusqu'à un bord de fuite (10), la pale d'éolienne (5) comporte un profil aérodynamique ayant une première surface latérale et une deuxième surface latérale, **caractérisée en ce qu'**au moins un dispositif de réduction de bruit (19) selon l'une quelconque des revendications 1 à 10 est installé sur la première ou deuxième surface latérale par rapport au bord de fuite (10) ou au niveau du bord de fuite (10), par exemple sur une surface de bord de fuite.
